# EUROPEAN PATENT APPLICATION

(11) **EP 2 019 018 A2**
(43) Date of publication of application: **28.01.2009**
(21) Application number: 08013342.4
(22) Date of filing: 24.07.2008
(51) Int. Cl.: B62D 1/185

(54) **Extendable shaft for steering vehicle and motor vehicle steering system**

(30) Priority: 27.07.2007 JP 2007196395
(71) Applicant: JTEKT Corporation, Osaka-shi Osaka 542-8502 (JP); Hiruta-Kogyo Co., Ltd., Kasaoka-shi Okayama 714-0062 (JP)
(72) Inventor: Miyawaki, Naoto, Osaka-shi Osaka 542-8502 (JP); Matsubara, Hideo, Osaka-shi Osaka 542-8502 (JP); Yoshioka, Koji, Osaka-shi Osaka 542-8502 (JP); Watanabe, Kazuhiro, Osaka-shi Osaka 542-8502 (JP); Kawanishi, Nao, Osaka-shi Osaka 542-8502 (JP); Ohtsuki, Shunichi, Kasaoka-shi Okayama 714-0062 (JP)
(74) Representative: Steil, Christian

(57) **Abstract**

An extendable shaft for steering vehicle (3) rotated according to the steering of a steering member (2) comprises: an inner shaft (10) and a tubular outer shaft (11) fitted with each other in a manner to be capable of relative sliding movement; a coupling element for rigidly interconnecting the inner shaft (10) and the outer shaft (11) in a circumferential direction (C) when a relative phase of the inner (10) and the outer shaft (11) exceeds a predetermined range; at least three pairs of axial grooves (31,32,35,36) formed on the inner shaft (10) and the outer shaft (11); and a plurality of resin rods (41,43,41A,43A,41B) interposed between the grooves as elastic coupling elements for elastically interconnecting the inner shaft (10) and the outer shaft (11) when the relative phase thereof is in the predetermined range. Plural resin rods (41,43;41A,43A; 41B). At least one of the resin rods is from such that the axis (A,B) of the inner and outer shaft (11) are tilted.

## Description

### BACKGROUND OF THE INVENTION

### Field of the Invention

The present invention relates to an extendable shaft for steering vehicle and a motor vehicle steering system.

### Description of Related Arts

The motor vehicle steering system comprises a steering shaft rotated with respect to the steering of a steering member such as a steering wheel (see, for example, the following documents 1 to 4).
Document 1: Published Japanese Translation of PCT Patent Application No.2002-539033 A
Document 2: U.S. Pat. No.6620050
Document 3: Japanese Unexamined Patent Publication No.2006-273128 A
Document 4: Japanese Patent Publication No.3797304 B

Some steering shafts are adapted for extendable movement (telescopic adjustment movement). Specifically, the steering shaft includes a male shaft and a tubular female shaft fitted with each other. These male and female shafts are coupled together by way of serrated coupling structure whereby the male shaft and the female shaft are capable of relative sliding movement in an axial direction and of rotating in synchronism.

A circumferential clearance is provided between serrated teeth of the male shaft and serrated teeth of the female shaft. This allows for a smooth relative sliding movement of these shafts. With a great clearance, however, the steering member exhibits an excessively great rotational play when positioned at a neutral steering position. This results in a load-less steering response and thence, in an impaired steering feeling. As a solution to this problem, it may be contemplated to form a resin film by coating nylon or the like onto the serrated teeth of the male shaft. Thus, these shafts are adapted to fill the clearance therebetween while maintaining a low sliding resistance therebetween.

However, in order to ensure the smooth relative sliding movement of these shafts and to provide a rigid feeling of the circumferential connection of these shafts, the resin film must be formed to a very close tolerance. This involves a substantial amount of time and effort to manufacture the steering shaft and a high manufacture cost.

In view of the foregoing, the invention seeks to provide an extendable shaft for steering vehicle, which is easy to manufacture and less expensive, as well as a motor vehicle steering system.

### SUMMARY OF THE INVENTION

According to an aspect of the invention for achieving the above object, an extendable shaft for steering vehicle rotated with respect to the steering of a steering member comprises: an inner shaft and a tubular outer shaft fitted with each other in a manner capable of relative sliding movement in an axial direction and of rotational torque transmission; a rigid coupling element for rigidly interconnecting the inner shaft and the outer shaft in a circumferential direction when a relative phase of the inner shaft and the outer shaft with respect to the circumferential direction exceeds a predetermined range; at least three pairs of axial grooves individually formed on an outer periphery of the inner shaft and an inner periphery of the outer shaft as opposed to each other and extending in the axial direction of the inner shaft; and a plurality of elongate resin rods as elastic coupling elements for elastically interconnecting the inner shaft and the outer shaft in the circumferential direction when the relative phase thereof is in the predetermined range. Each of the plural resin rods is interposed between the opposing axial grooves. At least one of the resin rods has a different specification from that of the other resin rods in order that an axis of the inner shaft and an axis of the outer shaft are tilted to each other.

According to the aspect, the axes of the inner shaft and the outer shaft are tilted to each other. Hence, at least one resin rod can be sufficiently compressed between the inner shaft and the outer shaft for elastic deformation. As a result, a circumferential clearance between the inner shaft and the outer shaft is assuredly filled by the resin rod. Hence, the circumferential connection between the inner shaft and the outer shaft by means of the resin rods can be increased in rigidity even when the relative phase of the inner and outer shafts is in the predetermined range. Therefore, the inner shaft and the outer shaft can be brought into unitary rotation without delay of rotation transmission between these shafts. Thus, the embodiment is capable of providing the rigid feeling of the connection of the inner shaft and the outer shaft, thus achieving a good steering feeling. Further, the resin rods having a low frictional resistance are interposed between the inner shaft and the outer shaft. This is effective to dramatically reduce sliding resistance when these shafts are slidably moved relative to each other in the axial direction. Therefore, a small force may be used for smoothly bringing these shafts into the relative sliding movement during the telescopic adjustment or the like. Furthermore, the resin rods relatively easy to mold are usable. This leads to an increased yield of the resin rods so that the manufacture cost is decreased.

### BRIEF DESCRIPTION OF THE DRAWINGS

FIG.1 is a schematic diagram showing a general structure of a motor vehicle steering system including an extendable shaft for steering vehicle according to one embodiment of the invention;
FIG.2 is an exploded perspective view showing a principal part of a steering shaft;
FIG.3 is a sectional view of the principal part of the steering shaft;
FIG.4 is a sectional view taken on the line IV-IV in FIG.3;
FIG.5 is a sectional view taken on the line V-V in FIG.3;
FIG.6 is an enlarged fragmentary view of FIG.4;
FIG.7 is an enlarged view of a principal part of FIG.6;
FIG.8A is an enlarged sectional view showing a principal part around a resin rod;
FIG.8B is an enlarged sectional view showing the principal part around the resin rod;
FIG.9 is a sectional view of a principal part showing a state where an inner shaft and an outer shaft are rigidly interconnected in a circumferential direction;
FIG.10 is a graph showing a relation between the steering angle and the torque exerted on the steering shaft;
FIG.11A is a sectional view showing a step of inserting the inner shaft into the outer shaft;
FIG.11B is a sectional view showing the step of inserting the inner shaft into the outer shaft;
FIG.11C is a sectional view showing the step of inserting the inner shaft into the outer shaft;
FIG.11D is a sectional view showing the step of inserting the inner shaft into the outer shaft;
FIG.12A is a schematic diagram showing a principal part of another embodiment of the invention;
FIG. 12B is a schematic diagram showing a principal part of still another embodiment of the invention;
FIG.12C is a schematic diagram showing a principal part of still another embodiment of the invention;
FIG.12D is a schematic diagram showing a principal part of still another embodiment of the invention;
FIG.13A is a schematic diagram showing a principal part of yet another embodiment of the invention;
FIG.13B is a schematic diagram showing a principal part of yet another embodiment of the invention;
FIG.13C is a schematic diagram showing a principal part of yet another embodiment of the invention;
FIG.13D is a schematic diagram showing a principal part of yet another embodiment of the invention; and
FIG.14 is a sectional view showing a principal part of still another embodiment of the invention.

### DETAILED DESCRIPTION OF THE PREFERRED EMBODIMENTS

A preferred embodiment of the invention will be described with reference to the accompanying drawings.

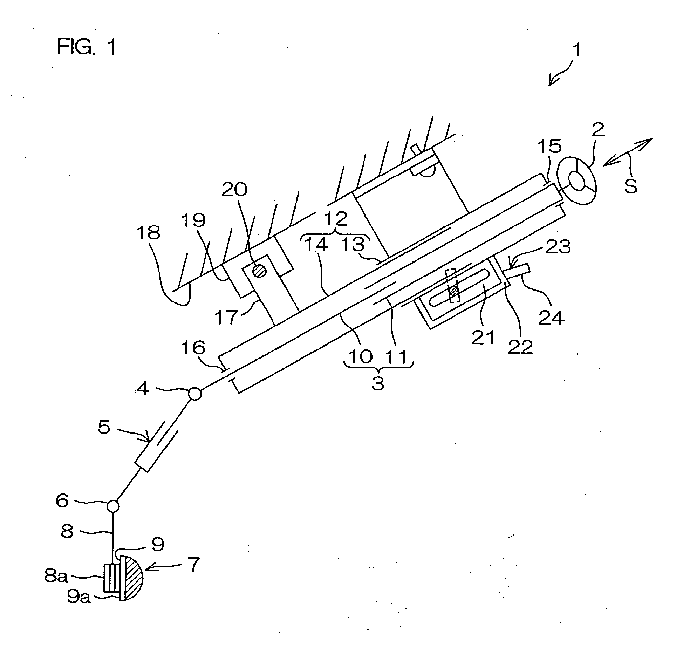

FIG. 1 is a schematic diagram showing a general structure of a motor vehicle steering system 1 comprising an extendable shaft for steering vehicle according to one embodiment of the invention. Referring to FIG.1, the motor vehicle steering system 1 has a tilt adjustment function to permit upward or downward tilt of a steering member 2 such as a steering wheel for general adjustment of a vertical position thereof relative to a driver. Further, the motor vehicle steering system 1 also has a telescopic adjustment function to permit a telescopic movement of the steering member 2 for general adjustment of a fore-aft position thereof relative to the driver.

The motor vehicle steering system 1 comprises the steering member 2 and a steering shaft 3 as an extendable shaft for steering vehicle. The steering shaft 3 is connected to the steering member 2 so as to be rotated according to the steering of the steering member 2.

The steering member 2 is mounted to one end of the steering shaft 3. The steering shaft 3 is angularly disposed so that the one end to which the steering member 2 is mounted is located on an upper side. The other end of the steering shaft 3 is connected to a steering mechanism 7 via a universal joint 4, an intermediate shaft 5 and a universal joint 6.

The steering mechanism 7 comprises a pinion shaft 8 and a rack shaft 9. The pinion shaft 8 joins the universal joint 6. The rack shaft 9 includes rack teeth 9a meshed with a pinion 8a at one end of the pinion shaft 8. When the steering shaft 3 is rotated by operatively turning the steering member 2, the pinion 8a of the steering mechanism 7 is rotated. The rotation of the pinion 8a is converted into a linear movement of the rack shaft 9 in a longitudinal direction thereof. Thus, the rack shaft 9 turns knuckle arms via unillustrated tie rods connected thereto, thereby steering steerable vehicle wheels.

The steering shaft 3 includes a tubular outer shaft 11 to which the steering member 2 is mounted, and an inner shaft 10 shaped like a rod. One end of the inner shaft 10 and one end of the outer shaft 11 are fitted with each other in a manner that these shafts are capable of torque transmission and of relative sliding movement in an axial direction S of the inner shaft 10 (hereinafter, simply referred to as the axial direction S). The other end of the inner shaft 10 is connected to the universal joint 4.

The steering shaft 3 is rotatably supported by a column tube 12. The column tube 12 includes an outer tube 13 surrounding the outer shaft 11, and an inner tube 14. The inner tube 14 and the outer tube 13 are fitted with each other in a manner to be capable of relative sliding movement in the axial direction S. The inner tube 14 embraces the inner shaft 10. The outer tube 13 rotatably supports the outer shaft 11 by means of a bearing 15 and is movable together with the outer shaft in the axial direction S. The inner tube 14 rotatably supports the inner shaft 10 by means of a bearing 16 and is incapable of relative movement in the axial direction S.

A first bracket 17 is fixed to the inner tube 14. The bracket 17 is supported by a second bracket 19 by means of a support shaft 20. The second bracket is fixed to a vehicle body 18. The inner tube 14 is pivotable about the support shaft 20.

A third bracket 21 is fixed to the outer tube 13. The third bracket 21 opposes a fourth bracket 22 fixed to the vehicle body 18. The third bracket 21 is locked to the fourth bracket 22 by means of a lock mechanism 23.

The third bracket can be unlocked by manipulating an operating lever 24 of the lock mechanism 23. An operation of moving the outer tube 13 and the outer shaft 11 relative to the corresponding inner tube 14 and inner shaft 10 in the axial direction S is enabled by unlocking the third bracket. Namely, a telescopic movement is enabled by unlocking the third bracket. Unlocking the third bracket also permits the steering shaft 3 and the column tube 12 to pivot about the support shaft 20. Namely, a tilt movement is enabled.

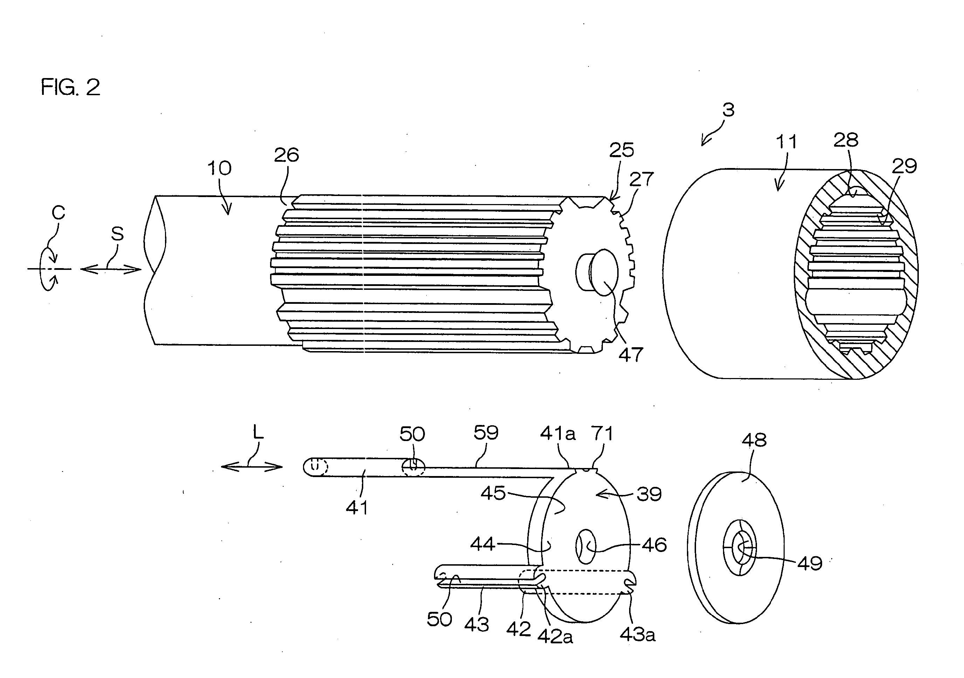

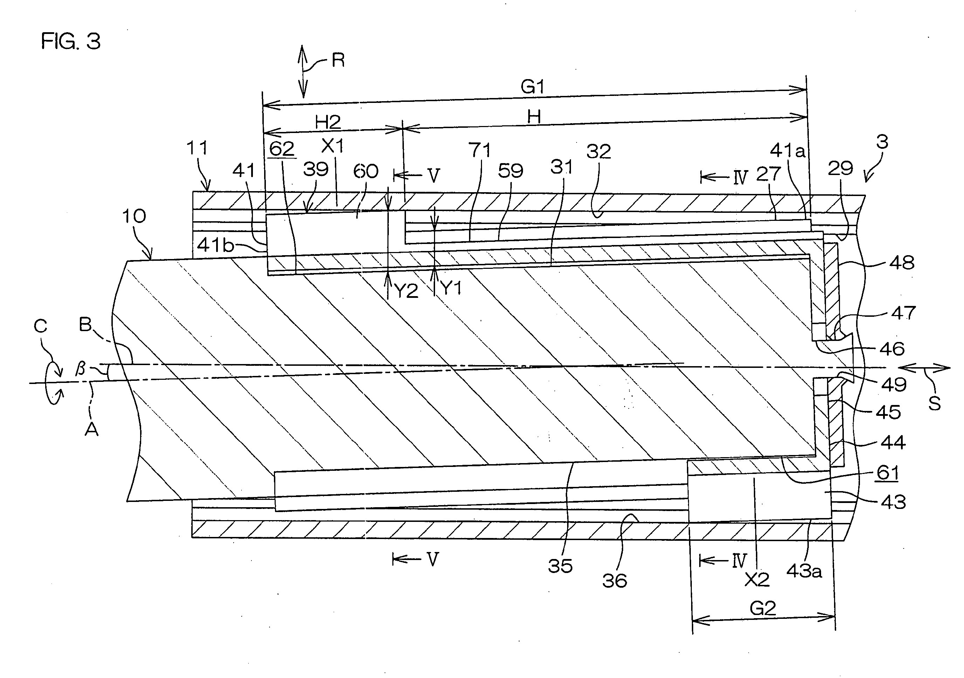

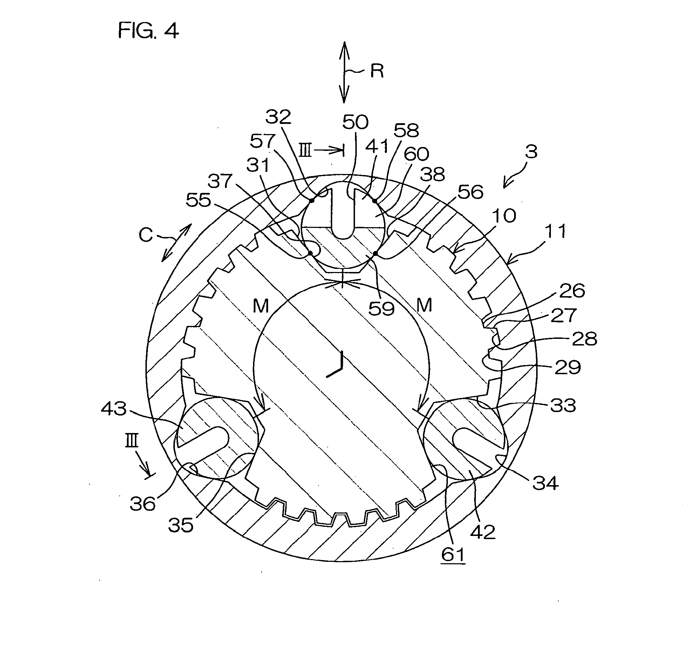

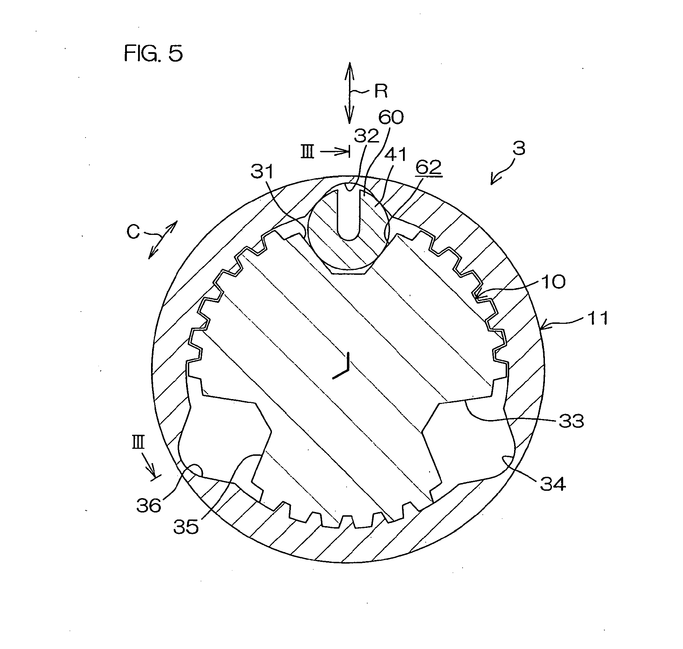

FIG. 2 is an exploded perspective view showing a principal part of the steering shaft 3. FIG.3 is a sectional view of the principal part of the steering shaft 3. FIG.4 is a sectional view taken on the line IV-IV in FIG.3. FIG.5 is a sectional view taken on the line V-V in FIG.3.

Referring to FIG.2, the inner shaft 10 and outer shaft 11 of the steering shaft 3 each comprise a high stiffness member formed from a metal. These inner shaft 10 and outer shaft 11 are provided with a serrated coupling structure 25 as a rigid coupling element.

The serrated coupling structure 25 is designed to establish a rigid connection of the inner shaft 10 and the outer shaft 11 in a circumferential direction C of the inner shaft 10 when a relative phase of these shafts 10, 11 (relative positions with respect to the circumferential direction C of the inner shaft 10) exceeds a predetermined range. Hereinafter, the circumferential direction C of the inner shaft 10 will be simply referred to as the circumferential direction C.

The serrated coupling structure 25 includes a male serration portion 27 formed on an outer periphery 26 of the one end of the inner shaft 10 and a female serration portion 29 formed on an inner periphery 28 of the one end of the outer shaft 11. These serration portions 27, 28 extend in parallel to axial directions of the corresponding inner shaft 10 and outer shaft 11, respectively. The male serration portion 27 and female serration portion 29 can be brought into meshing engagement by inserting the inner shaft 10 into the outer shaft 11.

Referring to FIG.3 and FIG.4, the outer periphery 26 of the inner shaft 10 and the inner periphery 28 of the outer shaft 11 are formed with three pairs of axial grooves 31,32;33,34;35,36 opposed to each other. Each of the axial grooves 31 to 36 extends in parallel to the axial direction (axial direction S) of the corresponding inner shaft 10 or outer shaft 11.

The three axial grooves 32, 34, 36 are formed on the inner periphery 28 of the one end of the outer shaft 11 and are arranged with equal spacing in a circumferential direction of the outer shaft 11. On the other hand, the three axial grooves 31, 33, 35 are formed on the outer periphery 26 of the one end of the inner shaft 10 and are arranged with equal spacing in the circumferential direction C.

The axial grooves 32, 34, 36 of the outer shaft 11 respectively oppose the corresponding axial grooves 31, 33, 35 of the inner shaft 10 in a radial direction R of the inner shaft 10 (hereinafter, simply preferred to as the radial direction R).

The axial grooves 32, 34, 36 of the outer shaft 11 each include a smoothly curved arcuate surface. The axial grooves 31, 33, 35 of the inner shaft 10 each include a pair of wall surfaces 37, 38 opposed to each other in the circumferential direction C. These wall surfaces 37, 38 are flat surfaces. Distance (groove width) between these wall surfaces 37, 38 is progressively decreased toward the inside in the radial direction R.

Referring to FIG.2 and FIG.3, a resin body 39 formed from a synthetic resin is interposed between the inner shaft 10 and the outer shaft 11. The resin body 39 is an article formed in one piece and includes elongate resin rods 41, 42, 43 as plural elastic coupling elements and a connecting portion 44. The connecting portion 44 is provided as a connecting member interconnecting these resin rods 41, 42, 43.

The connecting portion 44 includes a main body 45 shaped like a disk. The main body 45 is formed with a through-hole 46. A projection 47 is inserted through the through-hole 46. The projection 47 is a columnar portion projected from the one end face of the inner shaft 10. A push nut 48 is mounted to the projection 47. The main body 45 of the connecting portion 44 is clamped between the push nut 48 and the one end face of the inner shaft 10 and is fixed to place.

The push nut 48 is shaped like a disk. The push nut 48 is raised at a circumferential edge of a through-hole 49 formed at a radial center thereof. The projection 47 is inserted through this through-hole 49. The circumferential edge of the through-hole 49 is locked to the projection 47. The projection 47 is increased in diameter at a distal end thereof.

Referring to FIG.2 and FIG.4, the individual resin rods 41, 42, 43 extend from the main body 45 of the connecting portion 44 in parallel to the axial direction S. The resin rods 41, 42, 43 are interposed between the corresponding axial groove pairs 31,32;33,34;35,36.

Each of the resin rods 41, 42, 43 is formed with a groove 50. The resin rod 41, 42, 43 each have the groove 50 extended in parallel to a longitudinal direction L thereof. The grooves 50 extend through the respective resin rods 41, 42, 43 in the longitudinal direction L thereof. The grooves 50 of the resin rods 41, 42, 43 have a U-shaped cross-section opening toward the outside in the radial direction R.

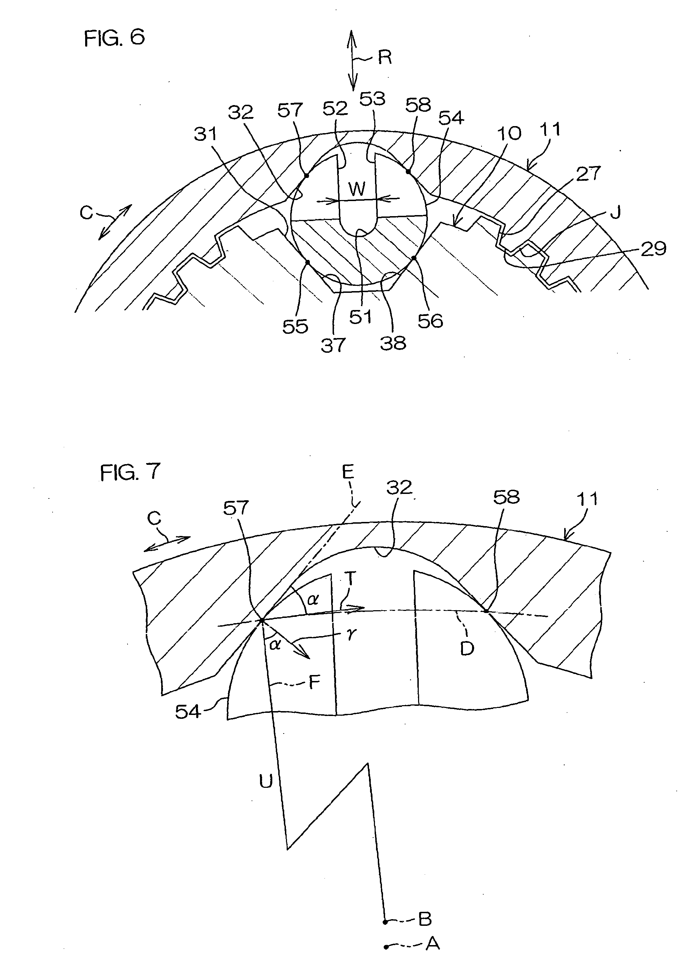

FIG.6 is an enlarged fragmentary view of FIG.4. Referring to FIG.6, a peripheral surface of each groove 50 (FIG.6 showing only the groove 50 of the resin rood 41) includes a bottom portion 51 and a pair of wall portions 52, 53. The bottom portion 51 includes a smoothly curved arcuate surface. The paired wall portions 52, 53 extend substantially in parallel relation and face each other across the bottom portion 51. The paired wall portions 52, 53 extend substantially in parallel to the radial direction R. A gap W between the paired wall portions 51, 52 is substantially constant as determined at any point with respect to the radial direction R.

An outer periphery of each resin rod 41, 42, 43 includes an arcuate surface 54 (FIG.6 showing only the resin rod 41). Circumferentially opposite ends of the arcuate surface 54 join the corresponding wall portions 52, 53 of the groove 50.

The arcuate surfaces 54 are respectively in contact with corresponding pairs of axial grooves 31,32;33,34; 35,36, thereby defining contact portions 55, 56, 57, 58. The contact portion 55 is in linear contact with the corresponding wall surface 37. The contact portion 56 is in linear contact with the corresponding wall surface 38. The contact portions 57, 58 are in linear contact with the corresponding axial groove 32, 34, 36.

In a cross-section shown in FIG.7, the contract portions 57, 58 are on a predetermined circle D. The circle D has its center on an axis B of the outer shaft 10 and has a predetermined radius of curvature U. The contact portions 57, 58 each make contact with the corresponding axial groove 32, 34, 36 (FIG.7 showing only the axial groove 32) of the outer shaft 11 at a predetermined contact angle α.

The contact angle α is defined to mean an angle formed between a tangent to the circle D at the contact portion 57(58) and a tangent E to the corresponding axial groove 32, 34, 36.

In other words, the contact angle α is equivalent to an angle between a load line γ of a force exerted on the arcuate surface 54 from the corresponding axial groove 32, 34, 36 and a phantom plane F. The phantom plane F includes the axis B of the outer shaft 11 and passes through the contact portion 57(58). The value of the above-described contact angle α may preferably be set in the range of 30° to 60° or more preferably of 40° to 50° .

Referring to FIG.2 and FIG.3, the embodiment is arranged such that at least one of the resin rods has a different specification from that of the other resin rods in order that the respective axes A, B of the inner shaft 10 and outer shaft 11 may be tilted to each other.

According to the embodiment, for example, the resin rod 41 as a predetermined resin rod is specified differently from the resin rods 42, 43. The axes A, B of the inner shaft 10 and the outer shaft 11 are tilted to each other to form an angle of tilt β. The tilt angle β is variable.

The above-described different "specifications" may be exemplified by (1) the lengths of the resin rods 41, 42, 43 in the longitudinal direction L (hereinafter, simply referred to as "the length") and (2) the existence/absence of a thin portion 59 at the resin rod 41, 42, 43.

Referring to FIG.3 and FIG.4, the resin rods 42, 43 are the two of the above resin rods 41, 42, 43 that have the same specification. The resin rod 41 is the one specified differently from these resin rods 42, 43.

As seen in the circumferential direction C, the resin rod 41 is disposed between the two resin rods 42, 43. With respect to the circumferential direction C, distances from the resin rod 41 to respective ones of the two resin rods 42, 43 are of the same value M.

The resin rod 41 has the longer length G1 than the others, substantially spanning the overall longitudinal range of the axial groove 31 of the inner shaft 10. Each of the resin rods 42, 43 has the shorter length G2, spanning less than a half of the longitudinal range of the corresponding axial groove 33, 35 of the inner shaft 10.

The resin rod 41 includes the above thin portion 59 and a thick portion 60.

The thin portion 59 is formed in the smaller thickness in the radial direction R so as not to abut against the outer shaft 11. The thin portion 59 is defined by forming a recess 71 at a part of an outside portion of the resin rod 41 in the radial direction R. The thin portion extends from a proximal end 41a as one end of the resin rod 41 toward a distal end 41b as the other end thereof. With respect to the axial direction S, the length H of the thin portion 59 is longer than the length H2 of the thick portion 60. With respect to the axial direction S, the length H of the thin portion 59 is longer than the length G2 of each of the resin rods 42, 43.

The thin portion 59 is formed with only the contact portions 55, 56 of the contact portions 55, 56, 57, 58. The thin portion 59 abuts against only the inner shaft 10 as the one of the inner shaft 10 and outer shaft 11.

The thick portion 60 is formed in the greater thickness in the radial direction R so as to abut against both the inner shaft 10 and the outer shaft 11. With respect to the radial direction R, the thickness Y2 of the thick portion 60 is about twice the thickness Y1 of the thin portion 59. The thick portion 60 is disposed at the distal end 41b of the resin rod 41 and juxtaposes to the thin portion 59 in the axial direction S. The length H2 of the thick portion 60 is substantially equal to the length G2 of the resin rods 42, 43.

The thick portion 60 is in contact with both of the paired axial grooves 31, 32 and includes the contact portions 55, 56, 57, 58.

The resin rods 42, 43 each comprise a thick portion. The resin rods 42, 43 are configured the same way as the thick portion 60 except that these resin rods 42, 43 have the shorter length in the axial direction S than that of the thick portion 60. The number of resin rod 41 as the longer resin rod is one which is less than the number (two) of the resin rods 42, 43 as the shorter resin rod. The resin rods 42, 43 each abut against both the inner shaft 10 and the outer shaft 11.

Referring to FIG.2 and FIG.3, the distal end 41a of the resin rod 41 and distal ends 42a, 43a of the resin rods 42, 43 are in aligned relation in the axial direction S.

A middle position X2 of the resin rod 42, 43 and a middle position X1 of the thick portion 60 of the resin rod 60 with respect to the longitudinal direction L are offset from each other in the axial direction S. This expedites the tilting of the inner shaft 10 relative to the outer shaft 11.

Referring to FIG.3 and FIG.4, the above-described arrangement permits a first region 61 including the one end of the inner shaft 10 to transmit torque to the outer shaft 11 via the two resin rods 42, 43. An external force from the resin rods 42, 43 is exerted on the two corresponding axial grooves 33, 35 of the first region 61, respectively.

As shown in FIG.3 and FIG.5, a second region 62 of the inner shaft 10 is away from the first region 61 and located on the other end of the inner shaft 10. The second region 62 is capable of torque transmission to the outer shaft 11 via the thick portion 60 of the resin rod 41. Thus, the external force from the resin rod 41 is exerted on the one axial groove 31 in the second region 62.

In the second region 62, the thick portion 60 of the resin rod 41 abuts against both the inner shaft 10 and the outer shaft 11. Abutting against both the inner shaft 10 and the outer shaft 11, the thick portion 60 inhibits the inner shaft 10 and the outer shaft 11 from coming closer to each other in the radial direction R at their portions corresponding to the location of the thick portion 60.

On the other hand, the thin portion 59 of the resin rod 41 abuts against only the inner shaft 10 of the inner and outer shafts 10, 11. Hence, the thin portion 59 permits the inner shaft 10 and the outer shaft 11 to come closer to each other in the radial direction R at their portion corresponding to the location of the thin portion 59.

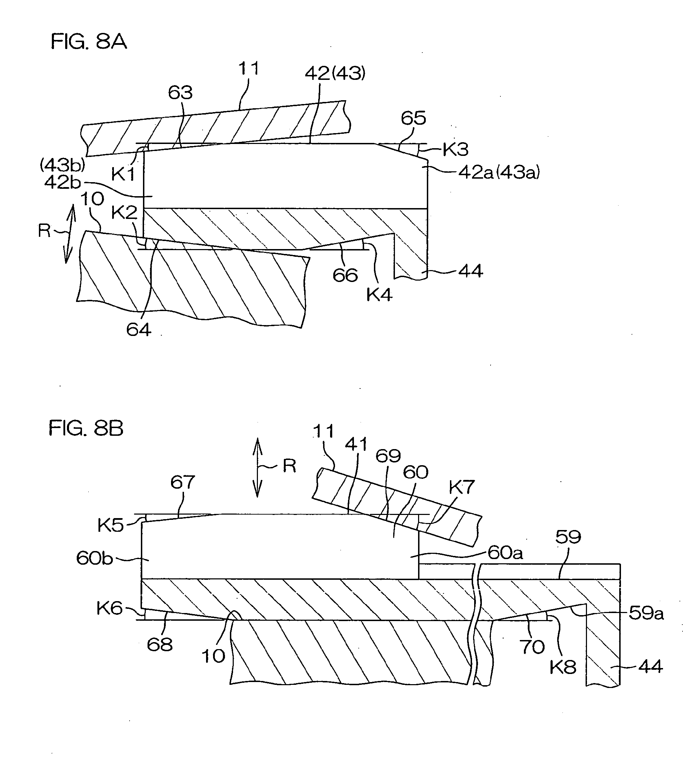

Referring to FIG.8A, the resin rods 42, 43 are formed with chamfers 63, 64, 65, 66 at their distal ends 42b, 43b and proximal ends 42a, 43a, respectively. Of the distal end 42b, 43b of each resin rod 42, 43, an outside end in the radial direction R is formed with the chamfer 63, which defines a smooth slant surface. The chamfer 63 has a predetermined angle of inclination K1. Of the distal end 42b, 43b of each resin rod 42, 43, an inside end in the radial direction R is formed with the chamfer 64, which defines a smooth slant surface. The chamfer 64 has a predetermined angle of inclination K2.

Of the proximal end 42a, 43a of each resin rod 42, 43, an outside end in the radial direction R is formed with the chamfer 65, which defines a smooth slant surface. The chamfer 65 has a predetermined angle of inclination K3. Of the proximal end 42a, 43a of each resin rod 42, 43, an inside end in the radial direction R is formed with the chamfer 66, which defines a smooth slant surface. The chamfer 66 has a predetermined angle of inclination K4.

Referring to FIG.3 and FIG.8A, the above-described configuration makes the individual resin rods 42, 43 extended from the connecting portion 44 less prone to be caught in the corresponding axial grooves 33,34; 35,36 when the resin rods 42, 43 are inserted between the corresponding pairs of axial grooves 33,34; 35,36. Because of the above slant surfaces 63, 64, the resin rods 42, 43 are increased in the area of contact with the inner and outer shafts 10, 11 so that pressure may be more evenly exerted on the resin rods 42, 43. Thus, the pressure on the resin rods 42, 43 is prevented from being increased locally. This may offer a favorable effect that despite the existence of the tilt angle β, stress on the resin body 39, caused by the inner shaft 10 and the outer shaft 11, is substantially evenly distributed when the resin rods 42, 43 are fully inserted. This is also effective to suppress the increase of sliding resistance. The angles of inclination K1, K2 are so defined as to ensure that a preload (initial preload) is evenly exerted on the resin rods during assembly. Thus is avoided the occurrence of place where the sliding resistance is abnormally increased.

The above inclination angles K1 to K4 may be defined such that all these angles are of the same value or that at least one inclination angle is different from the others. In the light of substantially evening out the stress on the slant surfaces 63, 54, it is preferred that the inclination angles K1, K2 are of mutually different values. The slant surfaces 63 to 66 may be replaced by curved surfaces formed by crowning. The curved surfaces have a predetermined radius of curvature.

The resin rods 42, 43 may exclude any one or more of the chamfers 63, 64, 65, 66.

Referring to FIG.8B, the thick portion 60 of the resin rod 41 is formed with chamfers 67, 68, 69 while the thin portion 59 thereof is formed with a chamfer 70. Of a distal end 60b of the thick portion 60 of the resin rod 41, an outside end in the radial direction R is formed with the chamfer 67, which defines a smooth slant surface. The chamfer 67 has a predetermined angle of inclination K5. Of the distal end 60b of the thick portion 60 of the resin rod 41, an inside end in the radial direction R is formed with the chamfer 68, which defines a smooth slant surface. The chamfer 68 has a predetermined angle of inclination K6.

Of a proximal end 60a of the thick portion 60 of the resin rod 41, an outside end in the radial direction R is formed with the chamfer 69, which defines a smooth slant surface. The chamfer 69 has a predetermined angle of inclination K7. Of a proximal end 59a of the thin portion 59 of the resin rod 41, an inside end in the radial direction R is formed with the chamfer 70, which defines a smooth slant surface. The chamfer 70 has a predetermined angle of inclination K8.

Referring to FIG.3 and FIG.8B, the above-described arrangement is made such that the resin rod 41 extended from the connecting portion 44 is inserted between the corresponding pair of axial grooves 31, 32 when assembled onto the inner shaft 10. The resin rod 41 is configured to be less prone to be caught in the corresponding axial grooves 31, 32 in this process. Because of the above slant surface 69, the resin rod 41 is increased in the area of contact with the inner and outer shafts 10, 11 so that the pressure may be more evenly exerted on the resin rod 41. Thus, the pressure is prevented from being increased locally. This may offer the favorable effect that despite the existence of the tilt angle β, the stress on the resin body 39, caused by the inner shaft 10 and the outer shaft 11, is substantially evenly distributed when the resin rod 41 is fully inserted. This is also effective to suppress the increase of sliding resistance. The angle of inclination K7 is so defined as to ensure that the preload (initial preload) is evenly exerted on the resin rod during assembly. Thus is avoided the occurrence of place where the sliding resistance is abnormally increased.

The above inclination angles K5 to K8 may be defined such that all these angles are of the same value or that at least one inclination angle is different from the others. The slant surfaces 67 to 70 may be replaced by curved surfaces formed by crowning. The curved surfaces have a predetermined radius of curvature.

The resin rod 41 may exclude any one or more of the chamfers 67, 68, 69, 70.

Referring to FIG.3 and FIG.4, the above-described arrangement is made such that when a steering angle θ of the steering member is in the range of -θ1≤θ≤1 (θ1 denotes a predetermined steering angle on the order of several minutes, for example), a relative phase of the inner and outer shafts 10, 11 is in a predetermined range. When the steering angle θ is zero, the steering member is at a neutral steering position. The steering angle θ assumes positive values with respect to one sense of the circumferential direction C and negative values with respect to the other sense of the circumferential direction C.

Hereat, the inner and outer shafts 10, 11 are in elastically supported relation to each other by means of the individual resin rods 41, 42, 43. Namely, these shafts 10, 11 are floatingly supported by the individual resin rods 41, 42, 43 and do not make direct contact with each other.

Hereat, the male serration portion 27 of the inner shaft 10 is not practically meshed with the female serration portion 29 of the outer shaft 11. The individual resin rods 41, 42, 43 elastically interconnect the inner and outer shafts 10, 11 in the circumferential direction C.

The axis A of the inner shaft 10 is tilted to the axis B of the outer shaft 11. Hence, at least one of the resin rods 41, 42, 43 (the resin rods 42, 43 when the steering shaft is in the state shown in FIG.3 and FIG. 4) is elastically deformed as compressed between the inner shaft 10 and the outer shaft 11.

In at least one pair of axial grooves, therefore, a clearance in the circumferential direction C is filled by the corresponding resin rod 41, 42, 43. In the state shown in FIG.3 and FIG.4, for example, the clearances in the circumferential direction C and between the two pairs of axial grooves 33, 34; 35, 36 are filled by the corresponding resin rods 42, 43, respectively. Referring to FIG.7, a torque T exerted between the inner and outer shafts 10, 11 acts in a direction of the tangent to the circle D at the contact portion 57, 58, so as to impart resistance to relative rotation between the inner shaft 10 and the outer shaft 11.

Referring to FIG.6, when the steering angle θ of the steering member is -θ1≤θ≤θ1, a predetermined clearance J in the circumferential direction C of the inner shaft 10 is provided between the serration portions 27, 29. Hence, the male serration portion 27 and the female serration portion 29 are out of meshing engagement when the steering angle θ is -θ1≤θ≤θ1.

As the absolute value of the steering angle θ increases in conjunction with the steering of the steering member, the individual resin rods 41, 42, 43 are compressed in the circumferential direction C and elastically deformed. Accordingly, the clearance J between the serration portions 27, 29 is decreased.

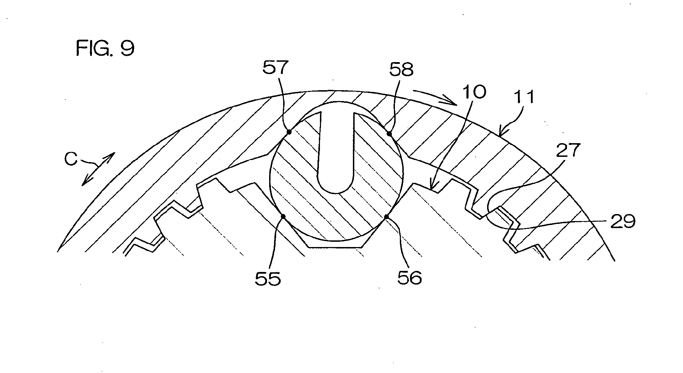

If the steering member is further turned to θ<-θ1 or θ1<θ so that the relative phase of the inner and outer shafts 10, 11 exceeds the predetermined range, the clearance between the corresponding serration portions 27, 29 is eliminated. Accordingly, as shown in FIG.9 for example, the male serration portion 27 and the female serration portion 29 are meshed with each other and rigidly coupled together. As a result, the inner and outer shafts 10, 11 are capable of transmitting the torque to each other via the serration portions 27, 29.

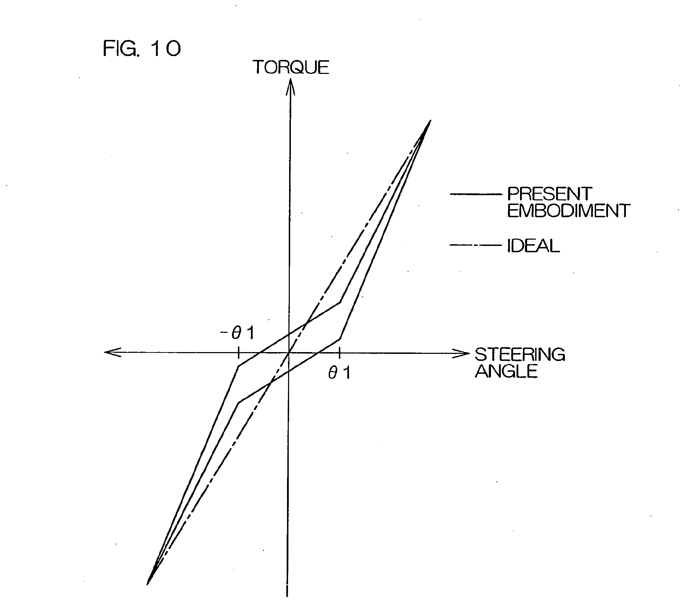

A relation between the steering angle θ and the torque produced in the steering member is that shown in FIG.10. As shown in FIG.10, the embodiment can provide a substantially linear relation between the steering angle θ and the torque exerted on the steering shaft 3. As a result, the relation can approximate to an ideal relation indicated by a dot-dash line in the graph.

As the absolute value of the steering angle θ is increased from zero, therefore, the torque is increased substantially linearly, so that the embodiment can provide a natural steering feeling. The embodiment does not exhibit a characteristic that, for example, the torque is substantially at zero when the steering angle θ is in the range of -θ1≤θ≤θ1 and that the torque is abruptly increased when the steering member is turned to θ<-θ1 or θ1<θ. As a result, the embodiment can prevent steering wander with the steering member in the vicinity of the neutral steering position.

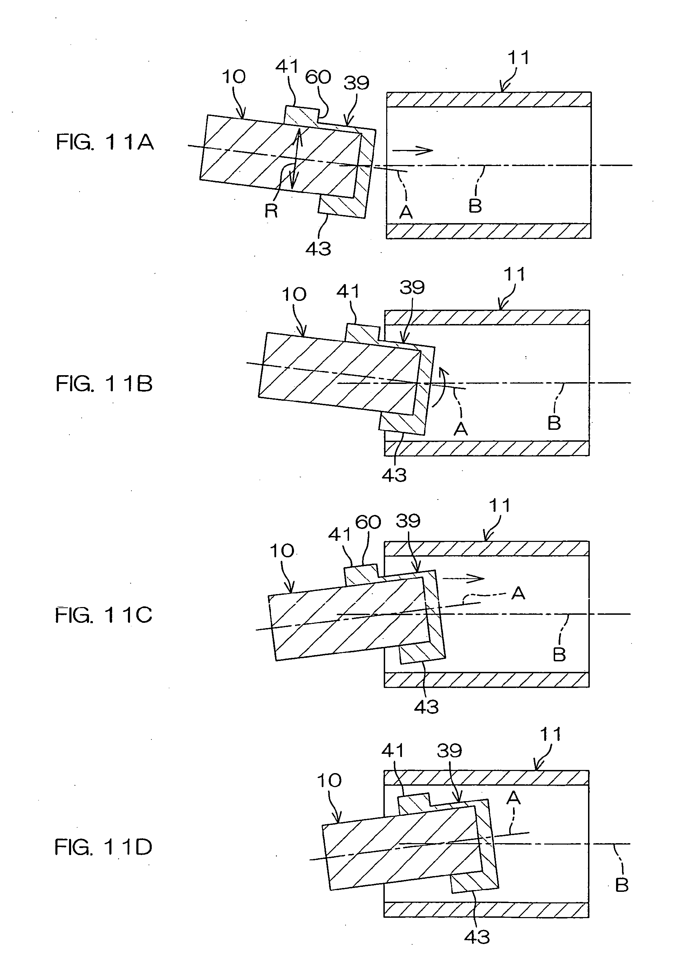

In the fabrication of the steering shaft 3, the insertion of the inner shaft 10 into the outer shaft 11 is carried out as illustrated in FIG.11 for example. First, as shown in FIG.11A, the outer shaft 11 and the inner shaft 10 with the resin body 39 fixed to the one end thereof are prepared. The axes A, B of these inner shaft 10 and outer shaft 11 are tilted relative to each other. Hereat, these shafts 10, 11 are tilted relative to each other in a manner to bring the thick portion 60 of the resin rod 41, out of the resin rods 41, 42, 43, to the closest place to the outer shaft 11 in the radial direction R. Thus, the resin rods 42, 43 are located inwardly of the inner periphery of the outer shaft 11 in the radial direction thereof.

In this state, the inner shaft 10 is inserted into the outer shaft 11, as shown in FIG.11B. After the shorter resin rods 42, 43 of the resin rods 41, 42, 43 are inserted into the outer shaft 11, the directions of the axes A, B of the inner shaft 10 and the outer shaft 11 are changed, as shown in FIG.11C. Thus, the thick portion 60 of the resin rod 41 is located inwardly of the inner periphery of the outer shaft 11 in the radial direction thereof.

In this state, the inner shaft 10 is further inserted, as shown in FIG.11D. Thus, the inner shaft 10 is fully inserted into the outer shaft 11.

The embodiment can offer the following working effects. Specifically, the groove 50 of each resin rod 41, 42, 43 has the U-shaped cross-section opening toward the outside in the radial direction R. This results in the following advantage. After the resin body 39 is formed by injecting a molten resin into a mold, individual parts of the mold which are placed inside the respective grooves 50 can be smoothly extracted in the radial direction of the corresponding resin rods 41, 42, 43. This negates the need for forcibly extracting the mold parts from the grooves.

In consequence of the axes A, B of the inner and outer shafts 10, 11 tilted to each other, the individual resin rods 41, 42, 43 can be sufficiently compressed between these shafts 10, 11 for elastic deformation. As a result, the clearance between the inner shaft 10 and the outer shaft 11 and in the circumferential direction C can be assuredly filled by the compressed resin rods 41, 42, 43. Thus, the circumferential connection of these shafts 10, 11 by means of the resin rods 41, 42, 43 can be increased in rigidity even when the steering angle e is in the range of -θ1≤θ≤θ1 (the relative phase of the inner and outer shafts 10, 11 is in the predetermined range).

As a result, the inner and outer shafts 10, 11 can be brought into unitary rotation without delay of rotation transmission between these shafts 10, 11. Accordingly, the embodiment is capable of providing the rigid feeling of the connection of the inner shaft 10 and the outer shaft 11, thus achieving a good steering feeling.

The resin rods 41, 42, 43 having a low frictional resistance are interposed between the inner shaft 10 and the outer shaft 11. This is effective to dramatically reduce sliding resistance when these shafts 10, 11 are slidably moved relative to each other in the axial direction S. Therefore, a small force may be used for smoothly bringing these shafts 10, 11 into the relative sliding movement during the telescopic adjustment or the like. Furthermore, the resin rods 41, 42, 43 relatively easy to mold are usable. This leads to an increased yield of the resin rods 41, 42, 43 (the resin body 39) so that the manufacture cost is decreased.

In addition, the axes A, B of the inner shaft 10 and outer shaft 11 can be tilted to each other by adopting the simple arrangement wherein the length G1 of the resin rod 41 and the length G2 of the resin rods 42, 43 are mutually different. Furthermore, the shorter resin rods 42, 43 are reduced in the area of contact with the inner and outer shafts 10, 11, so that these shafts 10, 11 may encounter less sliding load during the relative sliding movement. Additionally, the amount of tilt between the axes A, B of the inner shaft 10 and outer shaft 11 can be set to a desired value by properly defining the respective lengths G1, G2 of the resin rods 41, 42, 43.

Further, the axes A, B of the inner shaft 10 and outer shaft 11 can be tilted to each other by adopting the simple arrangement wherein the resin rod 41 formed with the thin portion 59 is provided. The resin rod 41 formed with the thin portion 59 is reduced in the area of contact with the inner and outer shafts 10, 11, so that these shafts 10, 11 may encounter less sliding load during the relative sliding movement.

With respect to the circumferential direction C, the two resin rods 42, 43 are disposed across the resin rod 41 and the distances M from the resin rod 41 to respective ones of the resin rods 42, 43 are equal to each other. Hence, the inner shaft 10 and the outer shaft 11 are supported by the three resin rods 41, 42, 43 in the same manner whichever rotational direction the steering shaft 3 is turned. Accordingly, the same steering feeling is provided during the rightward steering or the leftward steering.

The tilt angle β between the axis A of the inner shaft 10 and the axis B of the outer shaft 11 is varied according to the specifications of the individual resin rods 41, 42, 43, such as the configuration, location and the like. This permits the inner and outer shafts 10, 11 to range in the degree of tilt. Accordingly, the dimensional tolerances of the individual resin rods 41, 42, 43 are increased to make the resin rods 41, 42, 43 easier to fabricate. Further, the degree of tilts of the inner shaft 10 and the outer shaft 11 can be varied according to the expansion/shrinkage of the resin rods 41, 42, 43 due to temperature changes. Hence, the tilt angle β between the axes A, B of these shafts 10, 11 is varied when the volumes of the individual resin rods 41, 42, 43 change due to the temperature change. As a result, the variation of the load on the outer shaft 10 can be prevented, so that a low load can be maintained during the relative sliding movement of the inner shaft 10 and the outer shaft 11.

Since the connecting portion 44 is fixed to the one end of the inner shaft 10, the individual resin rods 41, 42, 43 can be positioned to the inner shaft 10. In addition, the individual resin rods 41, 42, 43 are prevented from rotating on their axes in the respective spaces between the corresponding pairs of axial grooves 31,32;33,43;35,36. As a result, the inner shaft 10 and the outer shaft 11 are prevented from undergoing unwanted variations of torsional stiffness therebetween when the relative phase of the inner and outer shafts 10, 11 is in the predetermined range. Therefore, the steering of the steering member 2 does not involve a rattling feeling even when the steering angle θ is small.

The arrangement is also made such that there is no place in the axial direction S at which all the three resin rods 41, 42, 43 simultaneously make contact with the inner shaft 10 and the outer shaft 11. Hence, the outer shaft 11 is prevented from receiving the sliding resistance from all the three resin rods 41, 42, 43 at any part thereof in the axial direction S. Thus is avoided the increase of the sliding resistance. The axis A of the inner shaft 10 and the axis B of the outer shaft 11 can be tilted relative to each other by utilizing the weights of these shafts 10, 11.

The arcuate surface 54 of each resin rod 41, 42, 43 is in linear contact with each corresponding axial groove 32, 34, 36 of the outer shaft 11 at the predetermined contact angle α. Thus, sliding friction (surface pressure) between each resin rod 41, 42, 43 and each corresponding axial groove 32, 34, 36 is reduced as much as possible, so that the wear of the resin rods 41, 42, 43 is assuredly suppressed.

When the inner shaft 10 is inserted into the outer shaft 11, the inner shaft 10 is inserted as an intermediary assembly having the resin body 39 fixed thereto. Hereat, the intermediary assembly, as tilted to the outer shaft 11, is easily inserted into the outer shaft 11 because the resin rod 39 is formed with the thin portion 59.

When the steering angle θ is -θ1≤θ≤θ1, the inner and outer shafts 10, 11 are elastically interconnected in the circumferential direction C by means of the resin rods 41, 42, 43. Hence, a reaction torque as a reaction equivalent to an input torque corresponding to the steering angle θ can be produced when the steering member 2 is steered. As a result, oversteer or understeer by the driver can be prevented so as to avert the steering wander by the driver.

Some steering reaction force is produced before the steering angle θ is increased to θ<-θ1 or θ1<θ. This prevents the transmitted torque from sharply fluctuating before or after the steering angle θ is increased to θ<-θ1 or θ1<θ. Hence, the reaction torque as the reaction equivalent to the input torque is increased smoothly. Accordingly, the embodiment is capable of giving only information necessary for the driver such as road surface conditions and vehicle behaviors, not transmitting unwanted torque fluctuations to the driver. As a result, the steering wander does not occur when the steering member is in the vicinity of the neutral steering position equivalent to the steering angle θ of zero. The steering system 1 can provide an enhanced stable feeling which is perceived via the steering member 2.

When the steering member 2 is rapidly steered from the neutral steering position, the resin rods 41, 42, 43 between the inner shaft 10 and the outer shaft 11 are compressed while the male serration portion 27 of the inner shaft 10 and the female serration portion 29 of the outer shaft 11 come into contact with each other. At this time, the individual resin rods 41, 42, 43 exert a buffer action to prevent the serration portions 27, 29 from making big noise when making contact with each other.

As described above, the motor vehicle steering system 1 can be substantialized which is designed to form the resin rods 41 to 43 without forcibly extracting the mold parts from the grooves 50, to achieve the good steering feeling, to permit the inner shaft 10 and the outer shaft 11 to be smoothly brought into the relative sliding movement by the small force and to reduce the manufacture cost.

The invention is not limited to the teachings of the foregoing embodiment and various changes or modifications may be made thereto within the scope of the claims thereof. The following description is principally made on differences from the embodiment shown in FIG.1 to FIG.11. Like reference characters refer to the corresponding components and the description thereof is dispensed with.

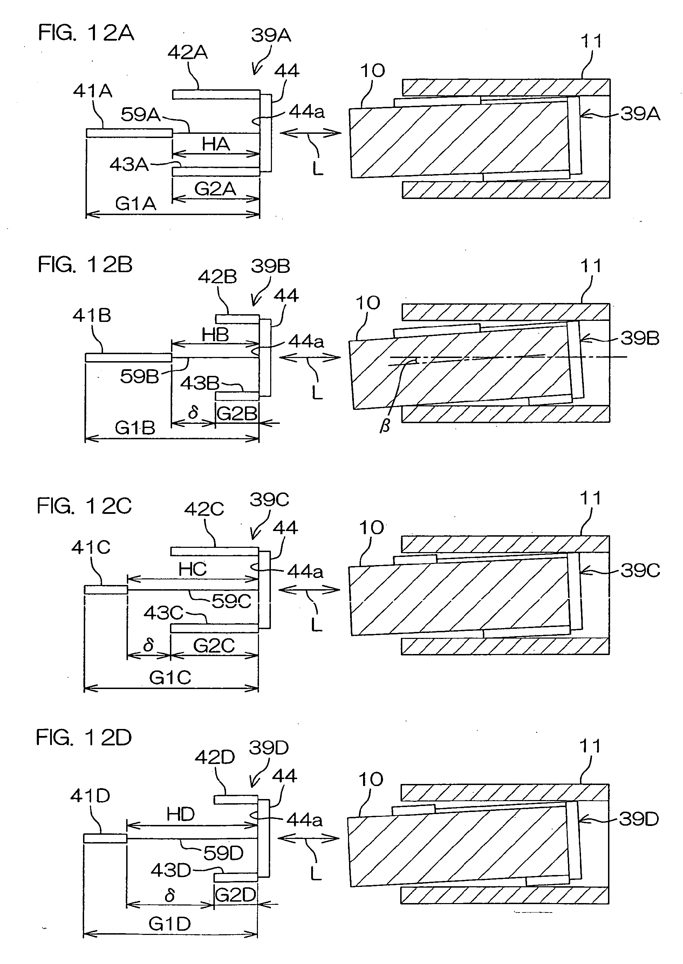

A resin body 39A shown in FIG.12A may be used, for example. In the resin body 39A, a resin rod 41A has the longer length G1A while resin rods 42A, 43A each have the shorter length G2A.

Hereinafter, "the length" means a length in the longitudinal direction L and is measured with reference to one side face 44a of the connecting portion 44. The length G2A is defined to be a half of the length G1A. The length G2A of the resin rods 42A, 43A is equal to a length HA of a thin portion 59A of the resin rod 41A.

Further, a resin body 39B shown in FIG.12B is also usable. The resin body 39B differs from the resin body 39A in the following point. A length G2B of resin rods 42B, 43B is different from a length HB of a thin portion 59B of a resin rod 41B by a predetermined adjusting margin δ.

Specifically, the length G2B of the individual resin rods 42B, 43B is shorter than the length G2A (see FIG.12A). The thin portion 59B has the longer length HB (=δ+G2B) while the resin rods 42B, 43B have the shorter length G2B. The value of the adjusting margin δ depends upon the length HB of the thin portion 59B and the length G2B of the resin rods 42B, 43B. That is, δ=HB-G2B (δ≥0). The tilt angle β between the inner shaft 10 and the outer shaft 11 depends upon the corresponding value of the adjusting margin δ. The tilt angle β can be easily adjusted by changing the value δ.

As shown in FIG.12C, another configuration may also be made such that a length G2C of resin rods 42C, 43C is equal to the length G2A of the resin rod 42A (see FIG.12A) and that a thin portion 59C of a resin rod 41C has a longer length HC than the length HA of the thin portion 59A of the resin rod 41A (see FIG.12A). This makes the length G2C of the resin rods 42C, 43C different from the length HC of the thin portion 59C of the resin rod 41C by the adjusting margin δ.

As shown in FIG.12D, still another configuration may also be made such that a thin portion 59D of a resin rod 41D has a longer length HD than the length HA of the thin portion 59A of the resin rod 41A (see FIG.12A) and that resin rods 42D, 43D each have a longer length G2D than the length G2A of the resin rods 42A, 43A (see FIG.12A). This makes the length G2D of the resin rods 42D, 43D different from the length HD of the thin portion 59D of the resin rod 41D by the adjusting margin δ.

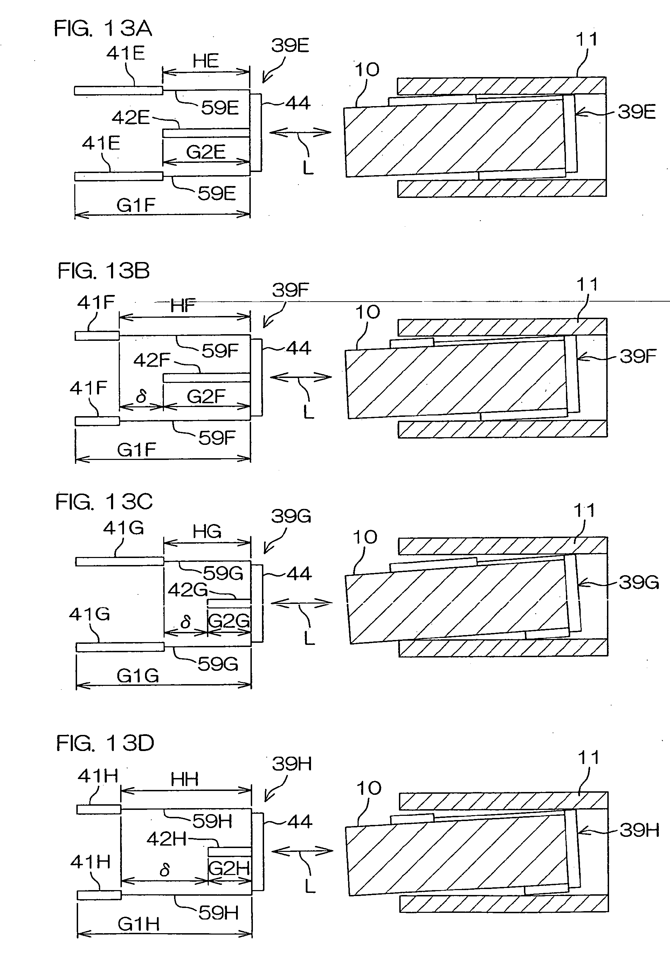

Further, a resin body 39E shown in FIG.13A may also be used. The resin body 39E includes two resin rods 41E, 41E having the same specification and a resin rod 42E having a different specification from that of these two resin rods 41E.

The resin rod 41E has the longer length G1E while the resin rod 42E has the shorter length G2E. The number of the resin rods 41E as the longer resin rod is greater than the number of the resin rod 42E as the shorter resin rod. The length G2E is defined to be a half of the length G1E. The length G2E of the resin rod 42E is equal to a length HE of a thin portion 59E of the resin rod 41E.

A resin body 39F shown in FIG. 13B may also be used. The resin body 39F differs from the resin body 39E shown in FIG.13A in the following point. A length G2F of a resin rod 42F is different from a length HF of a thin portion 59F of a resin rod 41F by the predetermined adjusting margin δ.

Specifically, the length HF of the thin portion 59F of the resin rod 41F is longer than the length HE of the thin portion 59E of the resin rod 41E (see FIG.13A). The tilt angle β between the inner shaft 10 and the outer shaft 11 depends upon the corresponding value of the adjusting margin δ.

As shown in FIG.13C, another configuration may also be made such that a length G1G of a resin rod 41G is equal to the length G1E of the resin rod 41E (see FIG.13A) and that a resin rod 42G has a shorter length G2G than the length G2E of the resin rod 42E (see FIG.13A). This makes the length G2G of the resin rod 42G different from a length HG of a thin portion 59G of the resin rod 41G by the adjusting margin δ.

As shown in FIG.13D, still another configuration may also be made such that a thin portion 59H of a resin rod 41H has a longer length HH than the length HE of the thin portion 59E of the resin rod 41E (see FIG. 13A) and that a resin rod 42H has a shorter length G2H than the length G2E of the resin rod 42E (see FIG. 13A) . This makes the length G2H of the resin rod 42H different from the length HH of the thin portion 59H of the resin rod 41H by the adjusting margin δ.

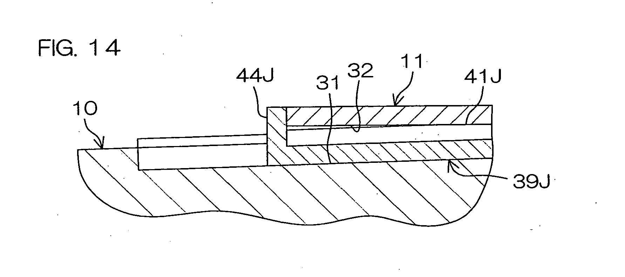

As shown in FIG.14, a resin body 39J including a connecting portion 44J fixed to the outer shaft 11 may also be used. The connecting portion 44J has an annular shape and is fixed to the one end face of the outer shaft 11 with an adhesive or the like. Individual resin rods (FIG.14 showing only one resin rod 41J) extend from the connecting portion 44J toward the one end of the inner shaft 10.

The foregoing embodiments may employ independent resin rods which are not connected to the connecting portion. The thin portion may also be configured to make contact with only the outer shaft 11.

The serrated coupling structure 25 may be replaced by a spline coupling structure. In this case, a male spline portion of the spline coupling structure is formed on the outer periphery 26 of the inner shaft 10 and a female spline portion is formed on the inner periphery 28 of the outer shaft 11.

The inner shaft 10 and the outer shaft 11 may be formed with four or more pairs of axial grooves in opposing relation.

The invention is also applicable to power steering apparatuses such as an electric power steering apparatus which employs an electric motor for applying a steering assist force to the steering shaft, and a hydraulic power steering apparatus which employs a hydraulic cylinder for applying the steering assist force to the rack shaft.

In this case, the absolute value of the steering angle θ from which the application of the steering assist force is started is set to a value corresponding to the above predetermined steering angle θ1. That is, a zone where the steering angle θ is in the range of -θ1≤θ≤θ1 is defined as a so-called dead zone where the steering assist force is not generated although the steering member 2 is steered. When the steering angle is so small that the steering assist force is not applied (dead zone), the torque transmission between the inner shaft 10 and the outer shaft 11 is carried out by means of the resin rods alone.

The invention is also applicable to the intermediate shaft interposed between the steering member and the steering mechanism.

While the invention has been described in greater details by way the specific examples thereof, it is apparent that changes, modifications and equivalents thereof will occur to those skilled in the art who have understood the above contents. The scope of the invention, therefore, is to be construed as defined by the appended claims and their equivalents.

## Claims

1. An extendable shaft for steering vehicle (3) rotated with respect to a steering of a steering member (2) comprising:
an inner shaft (10) and a tubular outer shaft (11) fitted with each other in a manner capable of relative sliding movement in an axial direction (S) and of rotating torque transmission;
a rigid coupling element (25) for rigidly interconnecting the inner shaft (10) and the outer shaft (11) in a circumferential direction (C) when a relative phase of the inner shaft (10) and the outer shaft (11) with respect to the circumferential direction (C) exceeds a predetermined range;
at least three pairs of axial grooves (31, 32, 33, 34, 35, 36) individually formed on an outer periphery (26) of the inner shaft (10) and an inner periphery (28) of the outer shaft (11) as opposed to each other and extending in the axial direction (S) of the inner shaft (10); and
a plurality of elongate resin rods (41, 42, 43; 41A, 42A, 43A; 41B, 42B, 43B; 41C, 42C, 43C; 41D, 42 D, 43D; 41E, 42E; 41E, 42F; 41G, 42G; 41H, 42H; 41J) as elastic coupling elements for elastically interconnecting the inner shaft (10) and the outer shaft (11) in the circumferential direction (C) when the relative phase thereof is in the predetermined range,
wherein each of the plural resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J, 42J) is interposed between the opposing axial grooves (31, 32, 33, 34, 35, 36) of the inner shaft (10) and the outer shaft (11), and
wherein at least one of the resin rods has a different specification from that of the other resin rods in order that an axis (A) of the inner shaft (10) and an axis (B) of the outer shaft (11) are tilted to each other.

2. An extendable shaft for steering vehicle (3) according to Claim 1, wherein the plural resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J) include a predetermined resin rod (41; 41A; 41B; 41C; 41D; 41E; 41F; 41G; 41H) having a thick portion (60) formed in greater thickness in a radial direction (R) of the inner shaft (10) and a thin portion (59; 59A; 59B; 59C; 59D; 59E; 59F; 59G; 59H) formed in smaller thickness,
wherein the thick portion (60) and the thin portion (59; 59A; 59B; 59C; 59D; 59E; 59F; 59G; 59H) are disposed in the axial direction (S),
wherein the thin portion (59; 59A; 59B; 59C; 59D; 59E; 59F; 59G; 59H) extends from one end (41a) of the predetermined resin rod (41; 41A; 41B; 41C; 41D; 41E; 41F; 41G; 41H),
wherein the thick portion (60) abuts against both the inner shaft (10) and the outer shaft (11) thereby inhibiting the inner shaft (10) and the outer shaft (11) from Coming closer to each other in the radial direction (R),
wherein the thin portion (59; 59A; 59B; 59C; 59D; 59E; 59F; 59G; 59H) abuts against only either one of the inner shaft (10) and the outer shaft (11) thereby permitting the inner shaft (10) and the outer shaft (11) to come closer to each other in the radial direction (R).

3. An extendable shaft for steering vehicle (3) according to Claim 1 or 2, wherein the plural resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J) include the longer resin rod (41; 41A; 41B; 41C; 41D; 41E; 41F; 41G; 41H; 41J) and a shorter resin rod (42, 43; 42A, 43A; 42B, 43B; 42C, 43C; 42D, 43D; 42E; 42F; 42H).

4. An extendable shaft for steering vehicle (3) according to Claim 3, wherein the longer resin rod (41; 41A; 41B; 41C; 41D; 41E; 41F; 41G; 41H; 41J) includes a thick portion (60) formed in the relatively greater thickness in a radial direction (R) of the inner shaft (10) and a thin portion (59; 59A; 59B; 59C; 59D; 59E; 59F; 59G; 59H) formed in the relatively smaller thickness,
wherein the thick portion (60) and the thin portion (59; 59A; 59B; 59C; 59D; 59E; 59F; 59G; 59H) are disposed in the axial direction (S),
wherein the thin portion (59; 59A; 59B; 59C; 59D; 59E; 59F; 59G; 59H) extends front one end (41a) of the longer resin rod (41; 41A; 41B; 4IC; 41D; 4IE; 41F; 4IG; 41H; 41J),
wherein the thick portion (60) abuts against both the inner shaft (10) and the outer shaft (11) thereby inhibiting the inner shaft (10) and the outer shaft (11) from coming closer to each other in the radial direction (R), and
wherein the thin portion (59; 59A; 59B; 59C; 59D; 59E; 59F; 59G; 59H) abuts against only either one of the inner shaft (10) and the outer shaft (11) thereby permitting the inner shaft (10) and the outer shaft (11) to come closer to each other in the radial direction (R).

5. An extendable shaft for steering vehicle (3) according to Claim 4, wherein the one end (41a) of the longer resin rod (41 ; 41A ; 41B; 4IC; 41D; 4IE; 41F; 41G; 41H; 41J) and one ends (42a, 43a) of the shorter resin rod (42, 43; 42A, 43A; 42B, 43B; 42C, 43C; 42D, 43D; 42E; 42F; 42G; 42H) are in aligned relation in the axial direction (S).

6. An extendable shaft for steering vehicle (3) according to Claim 5, wherein the thin portion (59; 59A; 59B; 59C; 59D; 59E; 59F; 59G; 59H) has a length (H; HA; HB; HC; HD; HE; HF; HG; HH) longer than a length (G2; G2A; G2B; G2C; G2D; G2E; G2F; G2G; G2H) of the shorter resin rod.

7. An extendable shaft for steering vehicle (3) according to Claim 3, wherein a number of the longer resin rod (41; 41A; 41B; 41C; 41D) is less than a number of the shorter resin rod (42, 43; 42A, 43A; 42B, 43B; 42C, 43C; 42D).

8. An extendable shaft for steering vehicle (3) according to Claim 3, wherein a number of the longer resin rod (41E; 41F; 41G; 41H) is greater than a number of the shorter resin rod (42E; 42F; 42G; 42H).

9. An extendable shaft for steering vehicle (3) according to any of Claims 1 to 8,
wherein at least one end (41a, 41b, 42a, 42b, 43a, 43b) of the plural resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J) is formed with chambers (63, 64, 65, 66, 67, 68, 69, 70).

10. An extendable shaft for steering vehicle (3) according to any of Claims 1 to 9,
wherein the plural resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J) each include a groove (50) extending in a longitudinal direction (L) of each of the plural resin rods (42, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J), and
wherein the groove (50) has a U-shaped cross-section opening toward the outside in the radial direction (R).

11. An extendable shaft for steering vehicle (3) according to any of Claims 1 to 10, further comprising a connecting portion (44,44J) fixed to one end of the inner shaft (10) or the outer shaft (11) and interconnecting the plural resinrods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J).

12. An extendable shaft for steering vehicle (3) according to any of Claims 1 to 11, wherein the plural resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J) include two resin rods (42, 43; 42A, 43A; 42B, 43B; 42C, 43C; 42D, 43D; 41E; 41F; 41G; 41H) having a same specification and one resin rod (41; 41A; 41B; 41C; 41D; 42E; 42F; 42G; 42H) having a specification different from that of the two resin rods (42, 43; 42A, 43A; 42B, 43B; 42C, 43C; 42D, 43D; 41E; 41F; 41G; 41H),
wherein the one resin rod (41; 41A; 41B; 41C; 41D; 42E; 42F; 42G; 42H) is disposed between the two resin rods (42, 43; 42A, 43A; 42B, 43B; 42C, 43C; 42D, 43D; 41E; 41F; 41G; 41H) in the circumferential direction (C), and
wherein distances between respective ones of the two resin rods (42, 43; 42A, 43A; 42B, 43B; 42C, 43C; 42D, 43D; 41E; 41F; 41G; 41H) and the one resin rod (41; 41A; 41B; 4IC; 41D; 42E; 42F; 42G; 42H) are equal to each other.

13. An extendable shaft for steering vehicle (3) according to any of Claims 1 to 12, wherein the extendable shaft for steering vehicle (3) includes a steering shaft (3) connected to the steering member (2).

14. A motor vehicle steering system (1) comprising an extendable shaft for steering vehicle (3) rotated according to the steering of a steering member (2),
the extendable shaft for steering vehicle (3) comprising: an inner shaft (10) and a tubular outer shaft (11) fitted with each other in a manner capable of relative sliding movement in an axial direction (S) and of rotating torque transmission;
a rigid coupling element (25) for rigidly interconnecting the inner shaft (10) and the outer shaft (11) in a circumferential direction (C) when a relative phase of the inner shaft (10) and the outer shaft (11) with respect to the circumferential direction (C) exceeds a predetermined range,
at least three pairs of axial grooves (31, 32, 33, 34, 35, 36) individually formed on an outer periphery (26) of the inner shaft (10) and an inner periphery (28) of the outer shaft (11) as opposed to each other and extending in the axial direction (S); and
a plurality of elongate resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J) as elastic coupling elements for elastically interconnecting the inner shaft (10) and the outer shaft (11) in the circumferential direction (C) when the relative phase thereof is in the predetermined range,
wherein each of the plural resin rods (41, 42, 43; 41A, 42A, 43A; 41B, 42B, 43B; 41C, 42C, 43C; 41D, 42D, 43D; 41E, 42E; 41F, 42F; 41G, 42G; 41H, 42H; 41J) is interposed between the opposing axial grooves (31, 32, 33, 34, 35, 36) of the inner shaft (10) and the outer shaft (11), and
wherein at least one of the resin rods has a different specification from that of the other resin rods in order that an axis (A) of the inner shaft (10) and an axis (B) of the outer shaft (11) are tilted to each other.
